(19) Europäisches Patentamt
European Patent Office
Office européen des brevets

(11) **EP 2 424 817 B1**

(12) **EUROPÄISCHE PATENTSCHRIFT**

(45) Veröffentlichungstag und Bekanntmachung des Hinweises auf die Patenterteilung:
**19.06.2013 Patentblatt 2013/25**

(21) Anmeldenummer: **10719256.9**

(22) Anmeldetag: **21.04.2010**

(51) Int Cl.:
*C01B 31/04* (2006.01)          *B82Y 30/00* (2011.01)
*C01B 31/02* (2006.01)          *C25B 11/12* (2006.01)
*H01M 8/02* (2006.01)          *B01J 27/20* (2006.01)

(86) Internationale Anmeldenummer:
**PCT/EP2010/002440**

(87) Internationale Veröffentlichungsnummer:
**WO 2010/127767 (11.11.2010 Gazette 2010/45)**

(54) **VERFAHREN ZUR HERSTELLUNG VON KOHLENSTOFFMATERIALIEN MIT STICKSTOFFMODIFIKATION AUSGEHEND VON KOHLENSTOFFNANORÖHRCHEN**

METHOD FOR PRODUCING CARBON MATERIALS HAVING NITROGEN MODIFICATION STARTING FROM CARBON NANOTUBES

PROCÉDÉ DE PRODUCTION DE MATÉRIAUX CARBONÉS MODIFIÉS PAR DE L'AZOTE À PARTIR DE NANOTUBES DE CARBONE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.05.2009 DE 102009019747**

(43) Veröffentlichungstag der Anmeldung:
**07.03.2012 Patentblatt 2012/10**

(73) Patentinhaber: **Bayer Intellectual Property GmbH**
**40789 Monheim (DE)**

(72) Erfinder:
• **FIGGEMEIER, Egbert**
**42799 Leichlingen (DE)**
• **ZILLNER, Elisabeth**
**86154 Augsburg (DE)**
• **ULFIK, Benno**
**51379 Leverkusen (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
• **MALDONADO S ET AL: "Structure, composition, and chemical reactivity of carbon nanotubes by selective nitrogen doping" CARBON, ELSEVIER, OXFORD, GB LNKD- DOI:10.1016/J.CARBON. 2005.11.027, Bd. 44, Nr. 8, 1. Juli 2006 (2006-07-01), Seiten 1429-1437, XP025010836 ISSN: 0008-6223 [gefunden am 2006-07-01] in der Anmeldung erwähnt**
• **Z. KÓNYA ET AL: "Large scale production of short functionalized carbon nanotubes" CHEMICAL PHYSICS LETTERS, Bd. 360, 12. Juli 2002 (2002-07-12), Seiten 429-435, XP002592165 in der Anmeldung erwähnt**
• **KUKOVECZ A ET AL: "Long-time low-impact ball milling of multi-wall carbon nanotubes" CARBON, ELSEVIER, OXFORD, GB LNKD- DOI: 10.1016/J.CARBON.2004.11.030, Bd. 43, Nr. 5, 6. Januar 2005 (2005-01-06) , Seiten 994-1000, XP004765662 ISSN: 0008-6223**
• **FRANCKE M ET AL: "Modification of carbon nanostructures by high energy ball-milling under argon and hydrogen atmosphere" CARBON, ELSEVIER, OXFORD, GB LNKD- DOI: 10.1016/J.CARBON.2004.12.013, Bd. 43, Nr. 6, 1. Mai 2005 (2005-05-01), Seiten 1204-1212, XP004824942 ISSN: 0008-6223**

**Beschreibung**

Die Erfindung betrifft ein neues Verfahren zur Herstellung von Kohlenstoffmaterialien ausgehend von Kohlenstoffnanoröhrchen, die mindestens an ihrer Oberfläche mit pyridinischen, pyrrolischen und/oder quarternären Stickstoffgruppen modifiziert sind.

Kohlenstoffnanoröhrchen sind mindestens seit ihrer Beschreibung 1991 von Iijima (S. Iijima, Nature 354, 56-58, 1991) dem Fachmann allgemein bekannt. Unter Kohlenstoffnanoröhrchen werden seither zylinderförmige Körper umfassend Kohlenstoff mit einem Durchmesser zwischen 3 und 80 nm und einer Länge, die ein Vielfaches, mindestens 10-faches des Durchmessers beträgt, zusammengefasst.

Weiterhin kennzeichnend für diese Kohlenstoffnanoröhrchen sind Lagen geordneter Kohlenstoffatome. Synonyme für Kohlenstoffnanoröhrchen sind beispielsweise "carbon fibrils" oder "hollow carbon fibres" oder "carbon bamboos" oder (im Fall von aufgewickelten Strukturen) "Nanoscrolls" oder "Nanorolls".

Diese Kohlenstoffnanoröhrchen haben aufgrund ihrer Dimensionen und ihrer besonderen Eigenschaften eine technische Bedeutung für die Herstellung von Kompositmaterialien. Wesentliche weitere Möglichkeiten liegen in Elektronik- und Energieanwendungen, da sie sich im Allgemeinen durch eine höhere spezifische Leitfähigkeit als graphitischer Kohlenstoff, z.B. in Form von Leitruß auszeichnen. Besonders vorteilhaft ist die Verwendung von Kohlenstoffnanoröhrchen, wenn diese hinsichtlich der oben genannten Eigenschaften (Durchmesser, Länge etc.) möglichst einheitlich sind.

Ebenfalls bekannt ist die Möglichkeit, diese Kohlenstoffnanoröhrchen durch Heteroatome z.B. der fünften Hauptgruppe (wie etwa Stickstoff) während des Verfahrens zur Herstellung der Kohlenstoffnanoröhrchen zu dotieren, um basische Katalysatoren zu erhalten.

Die allgemein bekannten Methoden zur Herstellung von stickstoffdotierten Kohlenstoffnanoröhrchen lehnen sich an die herkömmlichen Herstellmethoden für die klassischen Kohlenstoffnanoröhrchen wie beispielsweise Lichtbogen-, Laserablations- und katalytische Verfahren an.

Lichtbogen- und Laserablationsverfahren sind unter anderem dadurch gekennzeichnet, dass im Rahmen dieser Herstellverfahren Ruß, amorpher Kohlenstoff und Fasern mit hohen Durchmessern als Nebenprodukte gebildet werden, womit die resultierenden Kohlenstoffnanoröhrchen zumeist aufwändigen Nachbehandlungsschritten unterworfen werden müssen, was die aus diesen Verfahren erhaltenen Produkte und somit diese Verfahren wirtschaftlich unattraktiv macht.

Katalytischen Verfahren bieten hingegen Vorteile für eine wirtschaftliche Produktion von Kohlenstoffnanoröhrchen, da durch diese Verfahren gegebenenfalls ein Produkt mit hoher Qualität in guter Ausbeute herstellbar ist. Man unterscheidet bei den katalytischen Verfahren üblicherweise nach Verfahren mit geträgerten Systemen auf der einen Seite und sogenannten "Floating Catalyst"-Verfahren auf der anderen Seite.

Erstgenannte umfassen üblicherweise Katalysatoren, die sich auf einer Trägermatrix befinden, die unter Umständen selber katalytisch aktiv ist, Letztgenannte bezeichnen üblicherweise Verfahren, bei denen unter den Reaktionsbedingungen zur Herstellung der Kohlenstoffnanoröhrchen der Katalysator aus einer Vorläuferverbindung ("Precursor") gebildet wird.

Maldonado et. al. (Carbon 2006, 44(8), 1429-1437) offenbaren eine typische Ausführungsform der "Floating Catalyst"-Verfahren nach dem Stand der Technik. Das Verfahren zur Herstellung von stickstoffdotierten Kohlenstoffnanoröhrchen ist durch die In-situ-Zersetzung einer katalytischen Komponente (Ferrocen) in Anwesenheit von $NH_3$ und Xylol oder Pyridin gekennzeichnet. Allgemeiner Nachteil solcher Verfahren ist, dass die Verwendung von teuren metallorganischen Chemikalien für die Durchführung solcher Verfahren unumgänglich ist. Weiterhin sind eine Mehrzahl der metall-organischen chemischen Verbindungen stark gesundheitsschädlich oder stehen zumindest im Verdacht krebserzeugend zu sein.

In WO 2005/035841 A2 wird ein Verfahren offenbart, das die Herstellung von Elektroden enthaltend einen leitfähigen Kern und eine hierauf abgeschiedene Schicht von Stickstoffdotierten Kohlenstoffnanoröhrchen umfasst. Das Verfahren ist ein "Floating Catalyst"-Verfahren nach obiger Definition, mit den hiermit einhergehenden Nachteilen.

Van Dommele et al. und Matter et al. (S. van Dommele et al., Stud. Surf. Sci. and Cat., 2006, 162, 29-36, ed.: E.M. Gaigneaux et al.; P.H. Matter et al., J. Mol. Cat A: Chemical 264 (2007), 73-81) offenbaren je eine typische Ausführungsform der geträgerten Verfahren nach dem Stand der Technik, indem sie stickstoffdotierte Kohlenstoffnanoröhrchen auf einem geträgerten Katalysator umfassend Kobalt, Eisen oder Nickel auf einer $SiO_2$- oder MgO-Matrix verwenden, um Acetonitril oder Pyridin als Kohlenstoff- und Stickstoffquelle in Form von Kohlenstoffnanoröhrchen hierauf abzuscheiden. Diese Verfahren zur Herstellung sind unter anderem dadurch gekennzeichnet, dass sie in Festbettreaktoren im Labor durchgeführt werden.

Eine Alternative zu diesen Verfahren offenbart US 2007/0157348, in dem katalytisch unter weiterer Verwendung eines $H_2O$-Plasmas in einem Festbett stickstoffdotierte Kohlenstoffnanoröhrchen hergestellt werden. Das Verfahren umfasst unter anderem die Herstellung einer katalytischen Metallschicht auf einer Substratoberfläche, auf der dann im Weiteren die Kohlenstoffnanoröhrchen gebildet werden. Es handelt sich demzufolge um eine besondere Ausführungsform der geträgerten Verfahrensvariante zur Herstellung von Kohlenstoffnanoröhrchen.

Die gerade beschriebenen Verfahrensweisen (geträgerte und "Floating Catalyst"-Verfahren) sind dem Fachmann auch unter dem Überbegriff der katalytischen, chemischen Gasphasenabscheidung (catalytic chemical vapor deposition; CCVD) allgemein bekannt. Kennzeichnend für alle CCVD-Verfahren ist, dass die verwendete und als Katalysator bezeichnete Metallkomponente im Laufe des Syntheseprozesses verbraucht wird. Dieser Verbrauch ist im Allgemeinen auf eine Desaktivierung der Metallkomponente zurückzuführen, z. B. aufgrund der Abscheidung von Kohlenstoff auf dem gesamten Partikel, die zur vollständigen Bedeckung des Partikels führt (dem Fachmann ist dies als "Encapping" bekannt).

Eine Reaktivierung ist in der Regel nicht möglich bzw. wirtschaftlich nicht sinnvoll.

Verfahren, wie z.B. die zuvor offenbarten Verfahren nach Van Dommele et al. und Matter et al. sowie nach US 2007/0157348 sind unvorteilhaft, da sie in Festbettreaktoren durchgeführt werden und somit ein Austausch und Ersatz eventuell desaktivierten Katalysators nur unter großem Aufwand möglich ist.

Ebenso sind solche geträgerten Ausführungsformen dahingehend nachteilig, als dass die der Reaktion des Edukts zu mit Stickstoff modifizierten Kohlenstoffnanoröhrchen zur Verfügung stehenden katalytischen Metallzentren nur auf der Oberfläche der Partikeln bzw. des Substrates vorhanden sind. Dies wiederum führt zu einer inhärenten Beschränkung dieser Ausführungsformen in Bezug auf die erzielbare Ausbeute der mit Stickstoff modifizierten Kohlenstoffnanoröhrchen pro Partikel bzw. Substratmenge. Weiterhin sind die verwendeten Reaktortypen aufgrund der starken Volumenänderung des Festbettes während der mit Stickstoff modifizierten Kohlenstoffnanoröhrchenbildung für einen dauerhaften kontinuierlichen Betrieb nicht geeignet. Eine Maßstabsvergrößerung dieser Reaktortypen ist somit wirtschaftlich nicht möglich.

Verfahren, die dieser Einschränkung nicht unterliegen, sind insbesondere Wirbelschichtverfahren.

In DE 10 2006 017 695 A1 wird ein Verfahren offenbart, das die Herstellung von Kohlenstoffnanoröhrchen in einer Wirbelschicht umfasst, wobei insbesondere eine vorteilhafte Betriebsweise der Wirbelschicht offenbart wird, mittels derer kontinuierlich unter Zuführung neuen Katalysators und Abführung von Produkt Kohlenstoffnanoröhrchen hergestellt werden können. Es wird ebenfalls offenbart, dass die verwendeten Edukte Heteroatome umfassen können.

Eine nachträgliche Modifikation der Kohlenstoffnanoröhrchen mit Stickstoff wird hingegen nicht offenbart.

Eine Alternative zur Erzielung hoher Ausbeuten bezogen auf den eingesetzten Katalysator und zur Erzielung vorteilhafter Produkteigenschaften von Kohlenstoffnanoröhrchen wird in DE 10 2006 007 147 offenbart. Hier wird ein Katalysator offenbart, der einen hohen Anteil an katalytisch aktiven Metallkomponenten umfasst und daher zu den gewünscht hohen Ausbeuten führt. Es wird ebenfalls offenbart, dass die verwendeten Edukte Heteroatome umfassen können.

Eine nachträgliche Modifikation der Kohlenstoffnanoröhrchen mit Stickstoff wird hingegen nicht offenbart.

In der noch nicht offengelegten deutschen Patentanmeldung mit dem amtlichen Aktenzeichen DE 10 2007 062 421.4 wird ein vorteilhaftes Verfahren offenbart, mittels dessen die vorgenannten Nachteile des Standes der Technik gelöst werden können, wobei aber immer noch die Modifikation mit Stickstoff nur im Rahmen des eigentlichen Verfahrens zur Herstellung der mit Stickstoff modifizierten Kohlenstoffnanoröhrchen durch Verwendung von mindestens einem Edukt, umfassend Kohlenstoff und/oder Stickstoff offenbart wird.

Damit offenbart auch die DE 10 2007 062 421.4 kein Verfahren zur nachträglichen Modifikation von Kohlenstoffnanoröhrchen mit Stickstoff zum Erzeugen von mit an ihrer Oberfläche mit pyridinischen, pyrrolischen und/oder quarternären Stickstoffgruppen modifizierten Kohlenstoffmaterialien.

Ein Verfahren zur nachträglichen Modifikation von Kohlenstoffnanoröhrchen mit aminischem Stickstoff offenbaren Z. Konya et al. in "Large scale production of short functionalized carbon nanotubes" (Chem. Phys. Letters, 360, 2002: 429-435).

Z. Konya et al. offenbaren, dass es möglich ist, durch Mahlen von Kohlenstoffnanoröhrchen in Gegenwart von Reaktivgasen, wie Schwefelwasserstoff, Ammoniak, Chlor, Kohlenstoffmonoxid, Methymercaptan und Phosgen Kohlenstoffmaterialien zu erhalten, die mit chemischen Gruppen modifiziert sind, die aus diesen Reaktivgasen stammen. So wird im Rahmen des Mahlens mit Ammoniak offenbart, dass Amingruppen und/oder Amidgruppen an den Kohlenstoffnanoröhrchen angebunden werden können. Hierbei wird aber weiter offenbart, dass vor der reaktiven Mahlung die verwendete Kugelmühle entweder unter Spülung mit Stickstoff oder unter Vakuum ausgeheizt wird und hiernach das Reaktivgas unter Mahlen zudosiert wird. Nach dem reaktiven Mahlen wird wiederum entweder durch Spülung mit Stickstoff oder unter Vakuum das verbleibende Reaktivgas entfernt.

Z. Konya et al. offenbaren auch nicht, dass mit dem Verfahren ausgehend von Kohlenstoffnanoröhrchen Kohlenstoffmaterialien erhalten werden können, die pyridinische, pyrrolische und/oder quarternäre Stickstoffgruppen mindestens an ihrer Oberfläche umfassen. Außerdem ist das Verfahren nach Z. Konya et al. nachteilig, da zum Erhalt der aminischen Stickstoffgruppen an der Oberfläche der Kohlenstoffnanoröhrchen das, verglichen mit Stickstoff, giftige und korrosive Gas Ammoniak verwendet werden muss.

Ausgehend vom Stand der Technik stellt sich also nach wie vor die Aufgabe ein Verfahren zur Verfügung zu stellen, das es erlaubt graphitische Kohlenstoffmaterialien und insbesondere Kohlenstoffnanoröhrchen, die pyridinische, pyrrolische und/oder quarternäre Stickstoffgruppen mindestens an ihrer Oberfläche umfassen, zu erhalten, wobei die Modifikation mit Stickstoff auch außerhalb der Verfahren zur Herstellung der Kohlenstoffnanoröhrchen erfolgen kann und wobei die Modifikation mit Stickstoff möglichst einfach, unter verfahrenstechnisch unbedenklichen Bedingungen und preiswert erfolgt.

Überraschenderweise wurde nun als erster Gegenstand dieser Erfindung gefunden, dass ein Verfahren zur Herstellung von graphitischen Kohlenstoffmaterialien, die pyridinische, pyrrolische und/oder quarternäre Stickstoffgruppen mindestens an ihrer Oberfläche umfassen, ausgehend von Kohlenstoffnanoröhrchen, dadurch gekennzeichnet, dass Kohlenstoffnanoröhrchen unter Stickstoffatmosphäre gemahlen werden, diese Aufgabe lösen kann.

Im Zusammenhang mit der vorliegenden Erfindung bezeichnen graphitische Kohlenstoffmaterialien, die pyridinische, pyrrolische und/oder quarternäre Stickstoffgruppen mindestens an ihrer Oberfläche umfassen, Kohlenstoffmaterialien umfassend graphitischem Kohlenstoff, die an ihrer Oberfläche einen Anteil von mindestens 1-Atom-% Stickstoff in pyridinischer, pyrrolischer und/oder quarternärer Modifikation aufweisen.

Nach den im folgenden beschriebenen bevorzugten Ausführungsformen des erfindungsgemäßen Verfahrens können auch graphitische Kohlenstoffmaterialien, die pyridinische, pyrrolische und/oder quarternäre Stickstoffgruppen mindestens an ihrer Oberfläche umfassen, mit mindestens 5-Atom-% Stickstoff in pyridinischer, pyrrolischer und/oder quarternärer Modifikation erhalten werden.

Oberfläche der graphitischen Kohlenstoffmaterialien bezeichnet im Zusammenhang mit der vorliegenden Erfindung jenen Anteil der graphitischen Kohlenstoffmaterialien, die pyridinische, pyrrolische und/oder quarternäre Stickstoffgruppen mindestens an ihrer Oberfläche umfassen, welcher mittels Röntgen-Photoelektronenspektroskopie (nachfolgend auch kurz: XPS) einer Messung zugänglich ist. Dem Fachmann ist allgemein bekannt, dass die Röntgen-Photoelektronenspektroskopie (XPS) eine Analyse des zu untersuchenden Stoffes nur bis zu einer, abhängig vom Analysengerät und von der untersuchten Probe, bestimmten Tiefe erlauben.

Bevorzugte graphitische Kohlenstoffmaterialien, die pyridinische, pyrrolische und/oder quarternäre Stickstoffgruppen mindestens an ihrer Oberfläche umfassen, sind Kohlenstoffnanoröhrchen, die pyridinische, pyrrolische und/oder quarternäre Stickstoffgruppen mindestens an ihrer Oberfläche umfassen.

Diese können gemäß der vorliegenden Erfindung ebenfalls nach dem hier offenbarten Verfahren an ihrer Oberfläche einen Anteil von mindestens 1-Atom-% Stickstoff, bevorzugt mindestens 5-Atom-% Stickstoff in pyridinischer, pyrrolischer und/oder quarternärer Modifikation aufweisen.

Die gemäß dem erfindungsgemäßen Verfahren und seinen bevorzugten Ausführungsformen erhaltenen graphitischen Kohlenstoffmaterialien können diesen Anteil an Stickstoff neben den vorgenannten in Form von pyridinischen, pyrrolischen und/oder quarternären Stickstoffgruppen auch in weiteren Erscheinungsformen aufweisen. Eine solche weitere Erscheinungsform kann etwa auch aminischer Stickstoff sein.

Wesentlich für die vorliegende Erfindung ist allerdings, dass mit dem erfindungsgemäßen Verfahren pyridinische, pyrrolische und/oder quarternäre Stickstoffgruppen an/in den graphitischen Kohlenstoffmaterialien erhalten werden können, was nach dem bisherigen Stand der Technik entweder nicht oder nur im Zuge des Herstellverfahrens von mit Stickstoff modifizierten Kohlenstoffnanoröhrchen möglich war.

Das erfindungsgemäße Verfahren ist besonders vorteilhaft, weil es zum einen die nachträgliche Modifikation von Kohlenstoffnanoröhrchen mit den vorgenannten Erscheinungsformen des Stickstoff mindestens an deren Oberfläche erlaubt, zum anderen im Vergleich zu den reaktionstechnisch, katalytischen Verfahren besonders einfach auszuführen ist und zuletzt simultan erlaubt gegebenenfalls zu Beginn vorhandene Agglomerate der Kohlenstoffnanoröhrchen zu zerstören, so dass feinteilig dispergierte Kohlenstoffnanoröhrchen mit pyridinischen, pyrrolischen und/oder quarternären Stickstoffgruppen mindestens an deren Oberfläche erhalten werden können. Weiter kann auf die Verwendung von giftigen und korrosiven Gasen, wie etwa Ammoniak verzichtet werden.

Im Rahmen von Untersuchungen zum Aufbrechen vorgenannter Agglomerate wurde dann überraschend gefunden, dass eine chemische Modifikation der Kohlenstoffnanoröhrchen mit den verschiedenen Erscheinungsformen des Stickstoffs bereits unter mahlender Beanspruchung derselben unter einer Stickstoffatmosphäre eintritt, so dass graphitische Kohlenstoffmaterialien mit pyridinischen, pyrrolischen und/oder quarternären Stickstoffgruppen erhalten werden. Im Gegensatz zur Auffassung nach dem Stand der Technik (vgl. Z. Konya et al.) ist also Stickstoff kein Inertgas, sondern kann direkt zur Herstellung von graphitischen Kohlenstoffmaterialien mit pyridinischen, pyrrolischen und/oder quarternären Stickstoffgruppen verwendet werden.

Die gemäß dem erfindungsgemäßen Verfahren vorhandene Stickstoffatmosphäre bedeutet somit, dass das erfindungemäße Mahlen in einer Umgebung stattfindet, in der der Anteil an Stickstoff mindestens 78 Vol.-%, bevorzugt mindestens 90 Vol.-% beträgt.

In besonders bevorzugten Ausführungsformen des erfindungsgemäßen Verfahrens beträgt der Anteil an Stickstoff an der Umgebung mindestens 99 Vol.-%. Das erfindungsgemäße Verfahren kann aber auch unter Umgebungsluft ausgeführt werden.

Die Vorteile der erhaltenen graphitischen Kohlenstoffmaterialien mit pyridinischen, pyrrolischen und/oder quarternären Stickstoffgruppen liegen insbesondere in der Tatsache begründet, dass diese zum einen katalytisch aktiv sind, wie dies etwa bereits in der DE 10 2007 062 421.4 hervorgehoben wurde, und zum anderen an solchen Stickstoffgruppen weitere chemische Gruppen angebunden werden können, so dass die erhaltenen graphitischen Kohlenstoffmaterialien mit pyridinischen, pyrrolischen und/oder quarternären Stickstoffgruppen in besonders vorteilhafter Weise chemisch funktionalisiert werden können, was ebenfalls bereits in der DE 10 2007 062 421.4 angedeutet wurde.

Das erfindungsgemäße Mahlen kann in allen dem Fachmann allgemein bekannten Vorrichtungen zur Mahlung unter Anpassung an die Tatsache, dass das Mahlgut die Abmaße von Kohlenstoffnanoröhrchen haben kann, erfolgen. Das vorstehende Anpassen ist dem Fachmann in einfacher Weise möglich.

In einer bevorzugten Ausführungsform der vorliegenden Erfindung wird das Mahlen aber in einer Mahlkörpermühle ausgeführt.

Nicht abschließende Beispiele solcher Mahlkörpermühlen sind etwa Planeten-, Kugel-, Schwing - und Rührwerkkugelmühlen. Bevorzugte Mahlkörpermühlen sind Planetenmühlen.

Das Verwenden einer Mahlkörpermühle ist besonders vorteilhaft, weil in solchen Vorrichtungen nicht nur eine reibende Beanspruchung der Kohlenstoffnanoröhrchen stattfindet, sondern durch das Aufeinanderprallen von Mahlkörper und Mahlkörper bzw. Mahlkörper und Wand der Mahlkammer auch starke Impulskräfte von Mahlkörper und/oder Wand der Mahlkammer auftreten, so dass, wenn eines oder mehrere Kohlenstoffnanoröhrchen sich zwischen Mahlkörper und Mahlkörper bzw. Mahlkörper und Wand der Mahlkammer befinden diese sicher hierdurch intensiv mechanisch beansprucht werden.

Ohne an eine Theorie gebunden zu sein, erscheint es, als würde das kurzzeitige, hinreichende mechanische Beanspruchen unter Stickstoffatmosphäre genügen, mindestens die Oberfläche der Kohlenstoffnanoröhrchen einer chemischen Anbindung des gegenwärtigen Stickstoffs zugänglich zu machen, so dass alleine hierdurch bereits die graphitischen Kohlenstoffmaterialien, die pyridinische, pyrrolische und/oder quarternäre Stickstoffgruppen mindestens an ihrer Oberfläche umfassen, erzeugt werden können.

Das Mahlen gemäß dem erfindungsgemäßen Verfahren kann für einen Zeitraum von einer Minute bis hin zu sechzehn Stunden ausgeführt werden. Bevorzugt wird ein Mahlen für einen Zeitraum vier bis acht Stunden ausgeführt.

Die untere Grenze des Zeitraums, in dem ein Mahlen ausgeführt wird, ist in der Tatsache begründet, dass über die Zeit die Wahrscheinlichkeit einer einmaligen Beanspruchung eines zu mahlenden Kohlenstoffnanoröhrchens bestimmt wird.

Es hat sich herausgestellt, dass ein Zeitraum von einer Minute bereits zu einer messbaren Modifikation der Kohlenstoffnanoröhrchen mit Stickstoff führt, so dass ab dann von einer ausreichenden Wahrscheinlichkeit einer einmaligen Beanspruchung ausgegangen werden kann.

Die obere Grenze des Zeitraums ist vorteilhaft, weil mit einer dauernden Beanspruchung der Kohlenstoffnanoröhrchen im Zuge des Mahlens auch die Wahrscheinlichkeit steigt, dass diese mindestens an der Oberfläche in einen amorphen Zustand des Kohlenstoffs überführt werden. Da aber insbesondere die Struktur der Kohlenstoffnanoröhrchen, als auch der graphitischen Kohlenstoffmaterialien, die pyridinische, pyrrolische und/oder quarternäre Stickstoffgruppen mindestens an ihrer Oberfläche umfassen, wesentlich ist für deren positiven Eigenschaften, sollte dies vermieden werden. Es hat sich gezeigt, dass dies mit einer Begrenzung der Mahldauer auf maximal sechzehn Stunden sinnvoll erzielen lässt.

Hieraus wird auch klar, dass je nach Mahldauer die Kohlenstoffnanoröhrchen durch das Mahlen dergestalt zerkleinert werden, dass diese nicht mehr unter die allgemeine vorstehende Definition von Kohlenstoffnanoröhrchen, wie sie mittlerweile in der Fachwelt allgemein anerkannt ist, fallen, da die relevanten Durchmesser zu Längenverhältnisse nicht mehr erfüllt sind. Da aber Kohlenstoffnanoröhrchen allgemein eine graphitische Anordnung des Kohlenstoffs in chemischer Nahordnung umfassen, wird im Rahmen dieser Erfindung von graphitischen Kohlenstoffmaterialien gesprochen.

Dem Fachmann ist allerdings bewusst, dass aufgrund der vorstehenden aufgeführten Wahrscheinlichkeitsbetrachtungen ein kürzerer und eine längerer Zeitraum für das Mahlen durchaus möglich sind, ohne dass hierdurch von der hier vorliegenden Erfindung abgewichen würde.

Wesentlich für die vorliegende Erfindung ist neben der vorstehenden Wahrscheinlichkeit, aber der Eintrag eines Mindestmaßes an Energie in das Mahlgut der Kohlenstoffnanoröhrchen.

Ein solcher Energieeintrag liegt gemäß der vorliegenden Erfindung im Bereich von 5 kJ/$g_{Kohlenstoffnanoröhrchen}$ bis 4.000 kJ/$g_{Kohlenstoffnanoröhrchen}$. Bevorzugt liegt der Energieeintrag im Bereich von 500 kJ/$g_{Kohlenstoffnanoröhrehen}$ bis 2.500 kJ/$g_{Kohlenstoffnanoröhrchen}$.

Der Energieeintrag und die Mahldauer sind über die eingebrachte Mahlleistung auch über weite Bereiche miteinander verknüpft. Allerdings hängt der Energieeintrag auch von der Mahlvorrichtung als solche ab.

Der Energieeintrag sollte aber aus den gleichen Gründen, wie zuvor bezüglich der Mahldauer ausgeführt sowohl nach untern, aber insbesondere auch nach oben begrenzt sein, um insbesondere eine Ausbildung amorphen Kohlenstoffs zu verhindern.

In einer besonders bevorzugten Ausführungsform der vorliegenden Erfindung wird eine Planetenmühle als Mahlkörpermühle verwendet und eine Energie von 500 kJ/$g_{Kohlenstoffnanoröhrchen}$ bis 2500 kJ/$g_{Kohlenstoffnanoröhrchen}$ in einer Mahldauer von vier bis acht Stunden eingebracht.

Diese besonders bevorzugte Ausführungsform der vorliegenden Erfindung ist besonders vorteilhaft, weil zum einen die vorstehende Wahrscheinlichkeit zur mindestens einmaligen Beanspruchung der Kohlenstoffnanoröhrchen maximiert wird und zugleich der Energieeintrag so eingestellt ist, dass amorpher Kohlenstoff nur zu minimalen Mengen erhalten wird.

Eine insbesondere bevorzugte Ausführungsform des erfindungsgemäßen Verfahrens ist dadurch gekennzeichnet, dass Kohlenstoffnanoröhrchen unter Stickstoffatmosphäre mit einem Anteil an Stickstoff von mindestens 90 Vol.-% in einer Planetenmühle für einen Zeitraum von vier bis acht Stunden unter Eintrag von 500 kJ/g$_{Kohlenstoffnanoröhrchen}$ bis 2.500 kJ/g$_{Kohlenstoffnanoröhrchen}$ Energie gemahlen werden.

Ein weiterer Gegenstand der vorliegenden Erfindung ist die Verwendung von erfindungsgemäß erzeugten graphitischen Kohlenstoffmaterialien mit pyridinischen, pyrrolischen und/oder quarternären Stickstoffgruppen mindestens an deren Oberfläche, in Polymeren, Keramiken oder Metallen als Kompositbestandteil zur Verbesserung der elektrischen und/oder Wärme-Leitfähigkeit und/oder mechanischen Eigenschaften.

Ebenfalls möglich ist eine Verwendung der erfindungsgemäß erzeugten graphitischen Kohlenstoffmaterialien mit pyridinischen, pyrrolischen und/oder quarternären Stickstoffgruppen mindestens an deren Oberfläche zur Herstellung von Leiterbahnen und leitfähigen Strukturen.

Andere Verwendungen der erfindungsgemäß erzeugten graphitischen Kohlenstoffmaterialien mit pyridinischen, pyrrolischen und/oder quarternären Stickstoffgruppen mindestens an deren Oberfläche umfassen die Verwendung als Speichermedium z. B. für Wasserstoff oder Lithium, in Membranen z. B. für die Reinigung von Gasen, im medizinischen Bereich z. B. als Gerüst zur Wachstumssteuerung von Zellgewebe, im diagnostischen Bereich z. B. als Marker, sowie in der chemischen und physikalischen Analytik (z. B. in Rasterkraftmikroskopen).

Eine bevorzugte erfindungsgemäße Verwendung der erfindungsgemäß erzeugten graphitischen Kohlenstoffmaterialien mit pyridinischen, pyrrolischen und/oder quarternären Stickstoffgruppen mindestens an deren Oberfläche ist deren Verwendung als Katalysator in chemischen Reaktionen. Bevorzugt ist die chemische Reaktion eine elektrochemische Reaktion. Besonders bevorzugt umfasst die chemische Reaktion eine elektrochemische Sauerstoffreduktion.

Bei einer Verwendung als Katalysator in elektrochemischen Reaktionen ist insbesondere die Verwendung als Elektrodenmaterial in Brennstoff- und Elektrolysezellen bevorzugt.

Die vorstehenden Verwendungen der mit dem erfindungsgemäßen Verfahren erzeugten graphitischen Kohlenstoffmaterialien mit pyridinischen, pyrrolischen und/oder quarternären Stickstoffgruppen sind insbesondere deshalb vorteilhaft, weil mit der vorliegenden Erfindung eine solche Anwendung kostengünstig, weil einfach, zugänglich wird, da die erfindungsgemäß erhaltenen graphitischen Kohlenstoffmaterialien mit pyridinischen, pyrrolischen und/oder quarternären Stickstoffgruppen nicht mehr reaktionstechnisch, sondern durch rein mechanische Verfahrensweisen unter Stickstoffatmosphäre erhalten werden können und dennoch chemisch mit Stickstoffgruppen modifiziert sind.

Im Folgenden wird das erfindungsgemäße Verfahren und die bevorzugte Verwendung der unter Stickstoffatmosphäre gemahlenen Kohlenstoffnanoröhrchen als Katalysatoren anhand von Beispielen illustriert, wobei die Beispiele jedoch nicht als Einschränkung des Erfindungsgedankens zu verstehen sind.

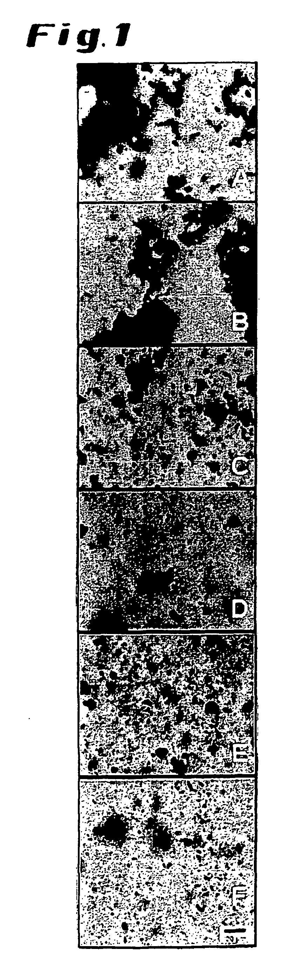

Fig. 1 zeigt die Messungen gemäß dem Beispiel 2 für Proben, die gemäß Beispiel 1 für zwei (A), sechs (B), zehn (C) und dreißig (D) Minuten, sowie zwei (E) und sechzehn (F) Stunden gemahlen wurden. Der Maßstabsbalken der Darstellung für die Probe nach sechzehn Stunden (F) gilt ebenso für die vorherigen Proben A bis E.

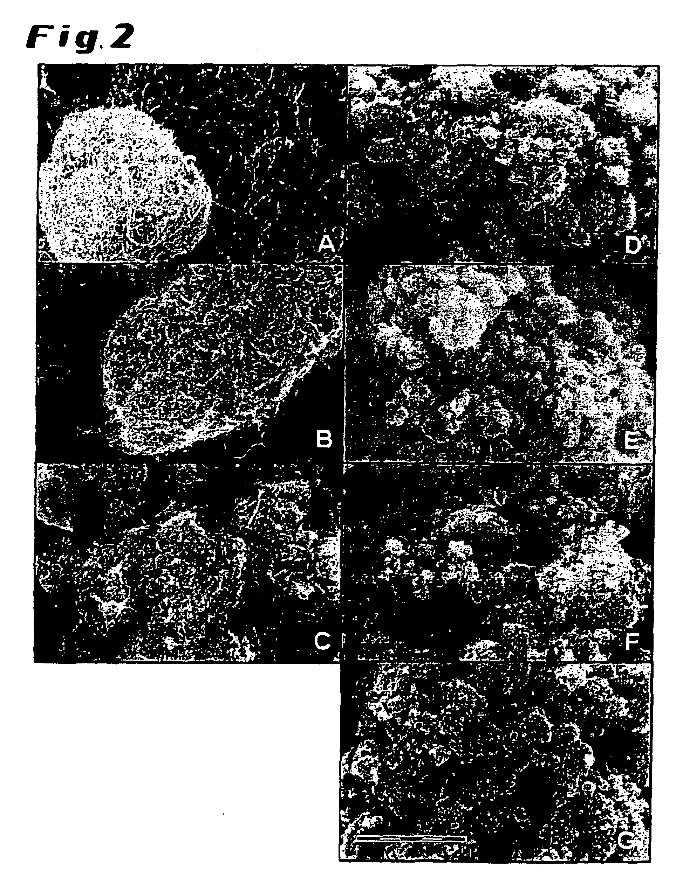

Fig. 2 zeigt die Messungen gemäß dem Beispiel 3 für Proben bei Versuchsbeginn (A), oder die gemäß Beispiel 1, zwei (B), fünfzehn (C) und dreißig (D) Minuten, sowie eine (E), zwei (F) und sechzehn (G) Stunden gemahlen wurden. Der Maßstabsbalken der Darstellung für die Probe nach sechzehn Stunden (G) entspricht einer Länge von 2 μm und gilt ebenso für die vorherigen Proben A bis F.

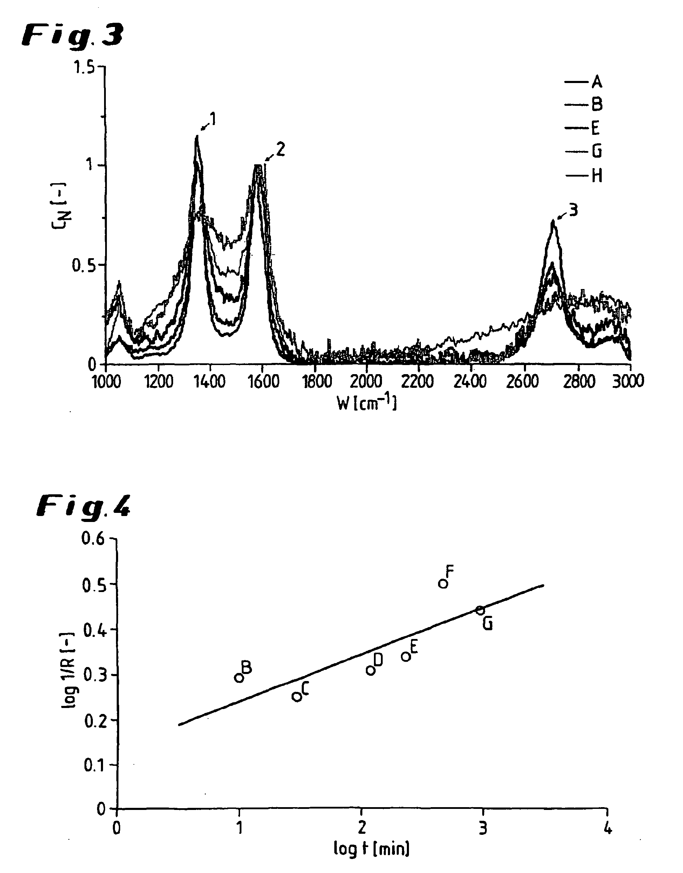

Fig. 3 zeigt Messergebnisse gemäß dem Beispiel 4, wobei nur die auf den Graphit-Peak (2) normierte Messwerte ($C_N$) über Wellenzahl (W) für Messungen von ungemahlenen Kohlenstoffnanoröhrchen (A), für 10 Minuten gemahlenen Kohlenstoffnanoröhrchen (B), für vier Stunden gemahlenen Kohlenstoffnanoröhrchen (E), für sechzehn Stunden gemahlenen Kohlenstoffnanoröhrchen (G) und für Ruß (H) dargestellt sind. Mit den Zahlen (1, 2, 3) sind relevante Messpeaks gemäß dem Beispiel 4 gekennzeichnet, die für die Proben A, B, E, G und H signifikante Aussagen über deren Defektdichte zulassen.

Fig. 4 zeigt eine doppelt logarithmische Darstellung der Defektdichte (1/R) über der Mahldauer (t) in Minuten, für die Messungen der Kohlenstoffnanoröhrchen gemäß dem Beispiel 4 nach 10 (B), 30 (C), 120 (D), 240 (E), 480 (F) und 960 (G) Minuten.

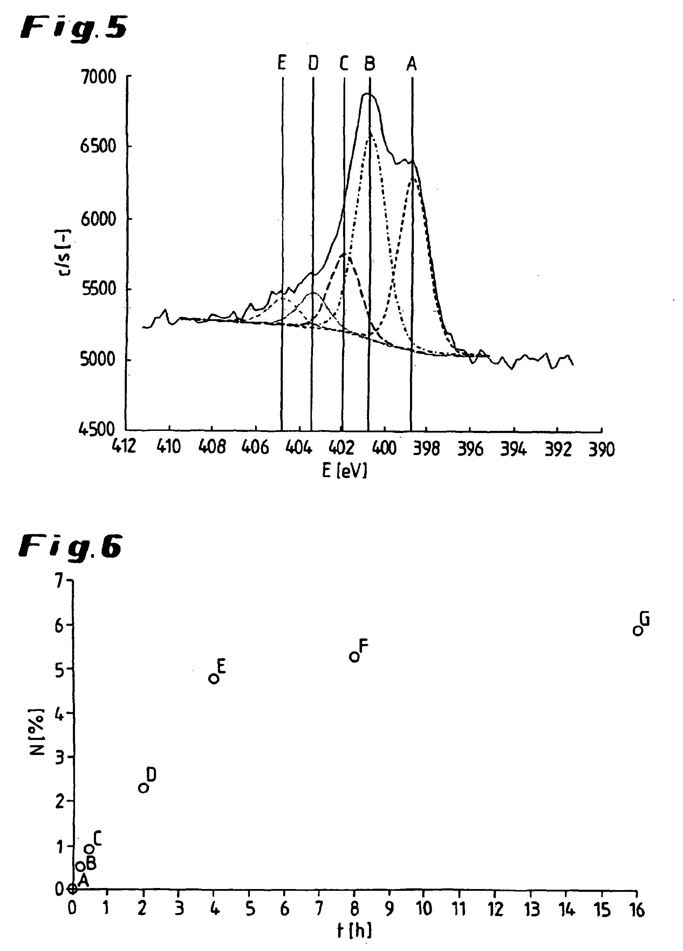

Fig. 5 zeigt das Messergebnis gemäß Beispiel 5 nach einer Mahldauer von acht Stunden. Dargestellt ist als schwarze durchgezogene Linie das eigentliche Messsignal (c/s) aufgetragen über der Bindungsenergie (E), sowie unter dem eigentlichen Messsignal idealisierte Messsignale für mögliche verschiedene Bindungstypen des Stickstoffs. Hierbei ist das idealisierte Messsignal pyridinisch gebundenen Stickstoffs (A) als kurz gestrichelte schwarze Linie mit Maximum bei einer Bindungsenergie von 398.67 eV dargestellt, das idealisierte Messsignal pyrrolisch gebundenen Stickstoffs (B) als schwarze Punkt-Strich Linie mit Maximum bei einer Bindungsenergie von 400.67 eV dargestellt, das idealisierte Messsignal quarternär gebundenen Stickstoffs (C) als lang gestrichelte schwarze Linie mit Maximum bei einer Bindungsenergie von 401.87 eV dargestellt, das idealisierte Messsignal pyridinisch als Stickoxid gebundenen Stickstoffs (D) als graue durchgezogene Line mit Maximum bei einer Bindungsenergie von 403.37 eV dargestellt und das idealisierte Messsignal als Stickoxid gebundenen Stickstoffs (E) als graue lang gestrichelte Line mit Maximum bei einer Bindungsenergie von 404.77 eV dargestellt.

Fig. 6 zeigt die gemäß dem Beispiel 5 ermittelten Anteile von Stickstoff an der Oberfläche der Kohlenstoffmaterialien in Atom-% (N) aufgetragen über der Mahldauer (t), für die Proben vermessen vor Versuchsbeginn (A), nach fünfzehn (B) und dreißig Minuten (C), sowie nach zwei (D), vier (E), acht (F) und sechzehn Stunden (G).

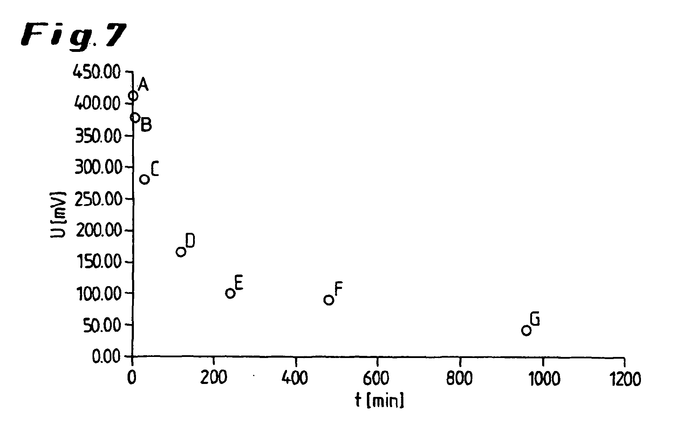

Fig. 7 zeigt die Reduktion der Überspannungen (U) zur Reduktion von Sauerstoff in Abhängigkeit der Mahldauer (t) durch Materialien vor dem Versuchsbeginn (A), nach sechs (B) und dreißig (C) Minuten, nach zwei (D), vier (E), acht (F) und sechzehn (G) Stunden gemäß dem Beispiel 6.

**Beispiele:**

**Beispiel 1: Erfindungsgemäßes Verfahren**

Es wurden 8 g Kohlenstoffnanoröhrchen (Bay-Tubes®C 150 P, Fa. Bayer MaterialScience AG) in Stahlbehälter für die Planetenmühle der Fa. Retsch GmbH, Modell PM4 eingebracht, in der sich 530 g Stahlkugeln eines Durchmessers von 2 mm befinden. Das Abfüllen der Baytubes und das Schließen der Behälter fanden in einer sog. "Glovebox" statt, die stetig mit reinem Stickstoff gespült wurde. Somit herrschte im Innern der Mahlkammer eine etwa 100 Vol-%ige Stickstoffatmosphäre vor.

Die Planetenmühle wurde für eine Zeit von sechzehn Stunden betrieben, wobei vor Versuchsbeginn, nach einer, zwei, sechs, zehn, fünfzehn und dreißig Minuten, sowie nach einer, zwei, vier, acht und sechzehn Stunden jeweils Proben entnommen wurden und einer Confokalen-Laser-Scanning-Microscopy (CLSM) Untersuchung gemäß Beispiel 2 und/oder einer Raster-Elektronen-Mikroskopischen (REM) Untersuchung gemäß Beispiel 3 und/oder Ramanspektroskopischen Untersuchung gemäß Beispiel 4 und/oder einer XPS (Photoelektronenspektroskopie) Untersuchung gemäß Beispiel 5 und/oder einer Verwendung als Katalysator gemäß Beispiel 6 zugeführt wurden.

**Beispiel 2: Confokale-Laser-Scanning-Mikroskopie Untersuchung**

Die Proben nach zwei (A), sechs (B), zehn (C) und dreißig (D) Minuten, sowie nach zwei (E) und sechzehn (F) Stunden wurden unter einem Confokalen-Laser-Scanning-Mikroskop (CLSM) des Modells TCS-NT, (Fa. Leica) untersucht.

Die Ergebnisse der Untersuchungen sind in Fig.

1 zusammengefasst dargestellt. Man erkennt, dass mit zunehmender Mahldauer die Anzahl von Agglomeraten der Kohlenstoffnanoröhrchen abnimmt.

**Beispiel 3: Raster-Elektronen-Mikroskopischen (REM) Untersuchung**

Die Proben vor Versuchsbeginn (A), nach zwei (B), fünfzehn (C) und dreißig (D) Minuten, sowie nach einer (E), zwei (F) und sechzehn (G) Stunden wurden unter einem Raster-ElektronenMikroskop (REM) des Typs S-FEG Sirion 100T (Fa. FEI Company) untersucht.

Die Ergebnisse der Untersuchungen sind in Fig. 2 zusammengefasst dargestellt. Man erkennt, dass mit zunehmender Mahldauer die mittlere Länge der Kohlenstoffnanoröhrchen abnimmt. Weiter wird das Ergebnis der Untersuchung aus Beispiel 2 bestätigt, dass die mittlere Größe der Agglomerate der Kohlenstoffnanoröhrchen abnimmt. Den Untersuchungen nach einer bis sechzehn (E bis F) Stunden kann weiter entnommen werden, dass nach diesen Zeiten bereits gewisse Anteile amorphen Kohlenstoffs auf der Oberfläche der Agglomerate vorhanden sind. Insbesondere würden die erhaltenen, immer noch graphitischen Kohlenstoffmaterialien nicht mehr unter die allgemein geläufige Definition von Kohlenstoffnanoröhrchen fallen. Es sind auf jeden Fall nur noch wenige, klar als Kohlenstoffnanoröhrchen identifizierbare Strukturen auf der Oberfläche zu erkennen.

**Beispiel 4: Ramanspektroskopische Untersuchung**

Die Proben vor Versuchsbeginn (A), nach zehn (B) und dreißig (C) Minuten, sowie nach zwei (D), vier (E), acht (F) und sechzehn (G) Stunden wurden mit einem Ramanspektrometer des Modells INDURAM, (Fa. Horiba Jobin Ivon) untersucht. Zusätzlich wurde noch Ruß (H, XC72R bezogen von Fa. Vulcan) analog untersucht.

Teile der Ergebnisse der Untersuchung sind in Fig. 3 zusammengefasst dargestellt, wobei aus Gründen der Übersichtlichkeit nur die Proben vor Versuchsbeginn (A), nach zehn Minuten (B), nach vier (E) und sechzehn (G) Stunden, sowie von Ruß (H) dargestellt sind.

Man erkennt in der Fig. 3 eine zunehmende Angleichung des gemessenen Spektrums hin zu jenem des Rußes (H). Durch den Mahlvorgang wird zum einen die Halbwertsbreite des ersten Defekt-Peaks (1) bei einer Wellenzahl von etwa 1350 cm$^{-1}$ und des Graphit-Peaks (2) bei einer Wellenzahl von etwa 1580 cm$^{-1}$ erhöht. Zum anderen ist auch eine deutliche Abnahme in der Intensität des zweiten Defekt-Peaks (3) bei einer Wellenzahl von etwa 2700 cm$^{-1}$ sichtbar.

In der Fig. 4 ist der Logarithmus, der unter Verwendung der Formel (I)

$$R = \frac{I(3)}{I(1)} \qquad (I)$$

ermittelten Defektdichte (1/R) über dem Logarithmus der Mahldauer in Minuten dargestellt. Gemäß der Formel (I) ist 1/R der Quotient des Messwerts der höchsten Intensität des Graphit-Peaks I(1) und des Messwerts der höchsten Intensität des zweiten Defekt-Peaks I(3).

In der Fig. 4 sind die jeweiligen Werte für die Proben nach zehn (B), dreißig (C) Minuten, sowie nach zwei (D), vier (E), acht (F) und sechzehn (G) Stunden dargestellt. Die Darstellung des Wertes vor Versuchsbeginn (t = 0 min.) entfällt mangels Darstellbarkeit des Logarithmus. Die Darstellung des Wertes von Ruß (H) entfällt mangels genauer Identifizierbarkeit des zweiten Defekt-Peaks eines bereits amorphen Stoffes.

Aus der Fig. 4 ist ein linearer Zusammenhang zwischen dem Logarithmus der Mahldauer und dem Logarithmus der Defektdichte erkennbar, was es ermöglicht, die Mahldauer hinsichtlich der resultierenden nicht amorphen Kohlenstoffnanoröhrchen zu optimieren. Hieraus kann auch ermittelt werden, dass die erfindungsgemäße Mahldauer vorteilhaft ist, da bis hierhin noch keine vollständige "Amorphisierung" eingetreten ist.

Die Tatsache, dass die Defektdichte unter Verwendung der Formel (I) ermittelbar ist, ist allgemein bekannt (z.B. Vix-Guterl et al. J. Phys. Chem. B, 108 (2004) 19361).

## Beispiel 5: XPS Untersuchung

Die Proben vor Versuchsbeginn (A), nach acht (B) und sechzehn (C) Stunden wurden mit einem XPS-Gerät (XPS) der Firma ULVAC PHI, Typ VersaProbe untersucht. Zur Anregung wurde monochromatische Al K$\alpha$-Strahlung (1.486,6 eV) verwendet.

Das Versuchsergebnis nach acht Stunden (B) ist in der Fig. 5 dargestellt. Man erkennt die schwarze durchgezogene Linie des eigentlichen Messsignals (c/s) der N1s-Linie, aufgetragen über der Bindungsenergie (E). Die für die angenommenen Stickstoffbindungen möglichen Messsignale der verschiedenen Bindungstypen des Stickstoffs sind unter dem Messsignal eingezeichnet, so dass die Überlagerung der Messsignale für die verschiedenen Bindungszustände möglichst genau das reale Messsignal ergibt.

Im Messsignal des Stickstoffs, das in Fig. 5 als Ausschnitt dargestellt ist, sind 5 verschiedene Bindungszustände erkennbar: Pyridinisch gebundener Stickstoff (A, kurz gestrichelte schwarze Linie), bei einer Bindungsenergie von 398.67 eV, pyrrolisch gebundener Stickstoff (B, schwarze Punkt-Strich Linie) bei einer Bindungsenergie von 400.67 eV, quarternär gebundener Stickstoff (C, lang gestrichelte schwarze Linie) bei einer Bindungsenergie von 401.87 eV, pyridinisch als Stickoxid gebundener Stickstoff (D, graue durchgezogene Line) bei einer Bindungsenergie von 403.37 eV und als Stickoxid vorliegender Stickstoff (E, graue lang gestrichelte Line) bei einer Bindungsenergie von 404.77 eV.

Aus den Daten der Fig. 5 wurde durch Integration und Umrechnung der Flächen unter den Linien A bis E der Anteil an Stickstoff in Atom-% der vermessenen Oberfläche für die Messwerte der Proben vor Versuchsbeginn (A), nach fünfzehn (B) und dreißig Minuten (C), sowie nach zwei (D), vier (E), acht (F) und sechzehn (G) Stunden ermittelt.

Die Ergebnisse dessen sind in der Fig. 6 zusammengefasst dargestellt. Während bei Versuchsbeginn (A) kein Stickstoffanteil gefunden werden konnte, wurden nach sechzehn (G) Stunden etwa 6 Atom-% Stickstoff auf der Oberfläche der Kohlenstoffmaterialien nachgewiesen.

## Beispiel 6: Verwendung der unter Stickstoffatmosphäre gemahlenen Kohlenstoffnanoröhrchen

Um die elektrochemisch, katalytischen Eigenschaften der gemäß dem Beispiel 1 erhaltenen graphitischen Kohlenstoffmaterialien, die pyridinische, pyrrolische und/oder quarternäre Stickstoffgruppen mindestens an ihrer Oberfläche umfassen zu untersuchen, wurden zunächst Suspensionen der aus Beispiel 1 erhaltenen Kohlenstoffmaterialien hergestellt, indem je 33,3 mg Kohlenstoffmaterialien zu je 100 ml Aceton in einem Erlenmeyerkolben gegeben und hiernach für jeweils 30 Minuten in einem Ultraschallbad behandelt wurden, um eine möglichst homogene Suspension zu erhalten.

Die somit erhaltene Suspension wurde auf eine Arbeitselektrode in Form einer rotierenden Ringscheibenelektrode (Elektrodenmaterial: Glassy-Carbon, Fa. Metrom) aufgebracht, indem vier mal in Folge 5 $\mu$l der Suspension auf diese Arbeitselektrode aufgebracht und hiernach jeweils das Aceton unter Umgebungsbedingungen (23°C, 1013 hPa) abgedampft wurde. Über die nun auf der Arbeitselektrode befindlichen Kohlenstoffmaterialien wurde eine Schicht eines fluorierten Kohlenwasserstoffs (Nafion®, Fa. DuPont) aufgetragen, indem 5 $\mu$l einer Suspension bestehend aus 0,26 mg/ml fluorierten Kohlenwasserstoffs in Isopropanol aufgebracht und nachfolgend das Isopropanol wiederum unter Umgebungsbedingungen (23°C, 1013 hPa) abgedampft wurde.

Die Arbeitselektrode wurde nach den vorstehenden Vorbereitungsschritten jeweils in eine 5 Gew.-%ige Chlorwasserstofflösung, die auf 60°C temperiert und mit Sauerstoff durch direktes Begasen gesättigt war, eingehängt.

Die Messung wurde dann in einer 3-Elektroden-Anordnung mit der Arbeitselektrode, einer Silber/Silberchlorid-Referenzelektrode und einer Platin-Gegenelektrode durchgeführt. Über eine elektrische Verschaltung und Steuerung (Potentiostat als Spannungsquelle) wurde die Spannung zwischen der Arbeitselektrode und Referenzelektrode eingestellt. Gleichzeitig wird mittels der Spannungsquelle sichergestellt, dass der Strom nur durch die Arbeitselektrode und die Gegenelektrode fließen und die Referenzelektrode stromlos bleibt.

Mit der einstellbaren Spannungsquelle wurde ausgehend von einer Spannung von 0,8 V gegenüber der vorgenannten Silber/Silberchlorid-Referenzelektrode in einer Geschwindigkeit von 20 mV/s bis hin zu einer Spannung von -0,2 V, gegenüber vorgenannter Silber/Silberchlorid-Referenzelektrode jeweils eine Messspannung zur Arbeitselektrode eingestellt.

In Abhängigkeit der Spannungen wurde der resultierende Strom gemessen. Die vorstehende Verfahrensweise wurde jeweils achtmal wiederholt.

Aus den erhaltenen Messdaten von Strom in Abhängigkeit von angelegter Spannung, konnte unter Verwendung des allgemein bekannten, theoretisch notwendigen Potentials zur Reduktion von Sauerstoff (+ 0,401 V) die reale Überspannung ermittelt werden, die jene weitere Spannung (jenes weitere Potential) angab, welche unter realen Bedingungen benötigt wurde, um eine tatsächliche Reduktion des Sauerstoffs zu bewirken.

Da die erfindungsgemäß hergestellten graphitischen Kohlenstoffmaterialien, die pyridinische, pyrrolische und/oder quarternäre Stickstoffgruppen mindestens an ihrer Oberfläche umfassen, katalytisch aktive Verbindungen einer solchen Reduktionsreaktion sind, wurde diese Überspannung, die etwa auf eine kinetische Hemmung der Reaktion zurückgeführt werden kann, reduziert.

Es wurden die notwendigen anzulegenden Spannungen bei einem Strom von 200 μA für Materialien vor dem Versuchsbeginn (A), nach sechs (B) und dreißig (C) Minuten, nach zwei (D), vier (E), acht (F) und sechzehn (G) Stunden verglichen.

In der Fig. 7 sind die gefundenen Überspannungen (U) in Abhängigkeit von der Mahldauer (t) dargestellt.

Man erkennt, dass in Abhängigkeit von der Mahldauer die Überspannung exponentiell reduziert wird. Hieraus ergibt sich die erfindungsgemäße, vorteilhafte Verwendung der erhaltenen graphitischen Kohlenstoffmaterialien, die pyridinische, pyrrolische und/oder quarternäre Stickstoffgruppen mindestens an ihrer Oberfläche umfassen zur elektrochemischen Reduktion von Sauerstoff.

Insbesondere ließ sich somit feststellen, dass eine Mahldauer von bis zu acht Stunden hierfür ein gewisses Optimum darstellt, da eine weitere Verdoppelung der Mahldauer auf sechzehn Stunden keine derart starke weitere Reduktion der Überspannung zu Folge gehabt hat, als dass dies lohnenswert erschien.

**Patentansprüche**

1. Verfahren zur Herstellung von graphitischen Kohlenstoffmaterialien, die pyridinische, pyrrolische und/oder quarternäre Stickstoffgruppen mindestens an ihrer Oberfläche umfassen, ausgehend von Kohlenstoffnanoröhrchen, **dadurch gekennzeichnet, dass** Kohlenstoffnanoröhrchen unter Stickstoffatmosphäre gemahlen werden.

2. Verfahren nach Anspruch **1, dadurch gekennzeichnet, dass** die Stickstoffatmosphäre einen Anteil an Stickstoff von mindestens 90 Vol.-% bevorzugt von mindestens 99 Vol.-% aufweist.

3. Verfahren nach Anspruch 1 oder 2, **dadurch gekennzeichnet, dass** das Mahlen in einer Mahlkörpermühle ausgeführt wird.

4. Verfahren nach Anspruch 3, **dadurch gekennzeichnet, dass** das Mahlen in einer Planetenmühle ausgeführt wird.

5. Verfahren nach einem der vorstehenden Ansprüche, **dadurch gekennzeichnet, dass** das Mahlen für einen Zeitraum von einer Minute bis zu sechzehn Stunden, bevorzugt für einen Zeitraum vier bis acht Stunden ausgeführt wird.

6. Verfahren nach einem der vorstehenden Ansprüche, **dadurch gekennzeichnet, dass** beim Mahlen Energie von 5 $kJ/g_{Kohlenstoffnanoröhrchen}$ bis 4.000 $kJ/g_{Kohlenstoffnanoröhrchen}$, bevorzugt im Bereich von 500 $kJ/g_{Kohlenstoffnanoröhrchen}$ bis 2.500 $kJ/g_{Kohlenstoffnanoröhrchen}$ eingetragen wird.

7. Verwendung von gemäß einem Verfahren nach einem der Ansprüche 1 bis 6 erzeugten graphitischen Kohlenstoffmaterialien mit pyridinischen, pyrrolischen und/oder quarternären Stickstoffgruppen mindestens an deren Oberfläche als Katalysator in chemischen Reaktionen.

8. Verwendung gemäß Anspruch 7, **dadurch gekennzeichnet, dass** die chemische Reaktion eine elektrochemische Reaktion ist.

9. Verwendung gemäß Anspruch 8, **dadurch gekennzeichnet, dass** die elektrochemische Reaktion eine Reduktion von Sauerstoff umfasst.

10. Verwendung gemäß Anspruch 8, als Elektrodenmaterial in Brennstoff- und Elektrolysezellen.

**Claims**

1. Process for producing graphitic carbon materials which have pyridinic, pyrrolic and/or quaternary nitrogen groups at least on their surface, starting from carbon nanotubes, **characterized in that** carbon nanotubes are milled under a nitrogen atmosphere.

**2.** Process according to Claim 1, **characterized in that** the nitrogen atmosphere has a proportion of nitrogen of at least 90% by volume, preferably at least 99% by volume.

**3.** Process according to Claim 1 or 2, **characterized in that** the milling is carried out in a milling media mill.

**4.** Process according to Claim 3, **characterized in that** the milling is carried out in a planetary mill.

**5.** Process according to any of the preceding claims, **characterized in that** the milling is carried out for a period of from one minute to sixteen hours, preferably for a period of from four to eight hours.

**6.** Process according to any of the preceding claims, **characterized in that** a quantity of energy of from 5 kJ/$g_{\text{carbon nanotubes}}$ to 4000 kJ/$g_{\text{carbon nanotubes}}$, preferably in the range from 500 kJ/$g_{\text{carbon nanotubes}}$ to 2500 kJ/$g_{\text{carbon nanotubes}}$, is introduced during milling.

**7.** Use of graphitic carbon materials having pyridinic, pyrrolic and/or quaternary nitrogen groups at least on their surface produced by a process according to any of Claims 1 to 6 as catalyst in chemical reactions.

**8.** Use according to Claim 7, **characterized in that** the chemical reaction is an electrochemical reaction.

**9.** Use according to Claim 8, **characterized in that** the electrochemical reaction comprises a reduction of oxygen.

**10.** Use according to Claim 8 as electrode material in fuel cells and electrolysis cells.


**Revendications**

**1.** Procédé de fabrication de matériaux carbonés graphitiques, qui comprennent des groupes azotés pyridiniques, pyrroliques et/ou quaternaires au moins sur leur surface, à partir de nanotubes de carbone, **caractérisé en ce que** des nanotubes de carbone sont broyés sous une atmosphère d'azote.

**2.** Procédé selon la revendication 1, **caractérisé en ce que** l'atmosphère d'azote comprend une proportion d'azote d'au moins 90 % en volume, de préférence d'au moins 99 % en volume.

**3.** Procédé selon la revendication 1 ou 2, **caractérisé en ce que** le broyage est réalisé dans un broyeur à corps de broyage.

**4.** Procédé selon la revendication 3, **caractérisé en ce que** le broyage est réalisé dans un broyeur planétaire.

**5.** Procédé selon l'une quelconque des revendications précédentes, **caractérisé en ce que** le broyage est réalisé pendant une durée d'une minute à seize heures, de préférence pendant une durée de quatre à huit heures.

**6.** Procédé selon l'une quelconque des revendications précédentes, **caractérisé en ce qu'**une énergie de 5 kJ/$g_{\text{nanotubes}}$ de carbone à 4 000 kJ/$g_{\text{nanotubes}}$ de $_{\text{carbone}}$, de préférence dans la plage allant de 500 kJ/$g_{\text{nanotubes}}$ de carbone à 2 500 kJ/$g_{\text{nanotubes}}$ de carbone, est introduite lors du broyage.

**7.** Utilisation de matériaux carbonés graphitiques, qui comprennent des groupes azotés pyridiniques, pyrroliques et/ou quaternaires au moins sur leur surface, formés par un procédé selon l'une quelconque des revendications 1 à 6 en tant que catalyseur dans des réactions chimiques.

**8.** Utilisation selon la revendication 7, **caractérisée en ce que** la réaction chimique est une réaction électrochimique.

**9.** Utilisation selon la revendication 8, **caractérisée en ce que** la réaction électrochimique comprend une réduction d'oxygène.

**10.** Utilisation selon la revendication 8, en tant que matériau d'électrode dans des piles à combustible et des cellules d'électrolyse.

## Fig.1

# Fig.2

## *Fig.3*

## *Fig.4*

**Fig.5**

**Fig.6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005035841 A2
- US 20070157348 A
- DE 102006017695 A1
- DE 102006007147
- DE 102007062421


**In der Beschreibung aufgeführte Nicht-Patentliteratur**

- **S. IIJIMA.** *Nature,* 1991, vol. 354, 56-58
- **MALDONADO.** *Carbon,* 2006, vol. 44 (8), 1429-1437
- **S. VAN DOMMELE et al.** *Stud. Surf. Sci. and Cat.,* 2006, vol. 162, 29-36
- **P.H. MATTER et al.** *J. Mol. Cat A: Chemical,* 2007, vol. 264, 73-81
- **Z. KONYA et al.** Large scale production of short functionalized carbon nanotubes. *Chem. Phys. Letters,* 2002, vol. 360, 429-435
- **VIX-GUTERL et al.** *J. Phys. Chem. B,* 2004, vol. 108, 19361